# EUROPEAN PATENT SPECIFICATION

(11) **EP 0 686 818 B1**
(45) Date of publication and mention of the grant of the patent: **11.09.2002**
(21) Application number: 95108632.1
(22) Date of filing: 06.06.1995
(51) Int. Cl.: F25D 29/00, G05D 23/20

(54) **Control method for a refrigerator apparatus and an apparatus implementing such method**
Verfahren zur Steuerung eines Kühlgerätes und ein Gerät zur Durchführung des Verfahrens
Procédé de commande d'un appareil frigorifique et un appareil pour la mise en oeuvre de ce procédé

(30) Priority: 08.06.1994 IT TO940472
(43) Date of publication of application: 13.12.1995
(73) Proprietor: WRAP S.p.A., 60044 Fabriano (AN) (IT)
(72) Inventor: Aisa, Valerio, I-60044 Fabriano (AN) (IT)
(74) Representative: Dini, Roberto, Dr. Ing.

(56) References cited:
- EP-A- 0 099 417
- EP-A- 0 177 404
- EP-A- 0 392 521
- EP-A- 0 513 539
- GB-A- 1 519 401
- JP-A- 6 082 141
- US-A- 4 481 785

## Description

The present invention refers to a control method for a refrigerator apparatus according to the preamble of the annexed claim 1 **and to an electronically controlled household apparatus according to the preamble of the annexed claim 14.**

A refrigerator apparatus of the type such as that indicated is known for instance from the European patent application n° 0 513 539.

All modern electronically controlled domestic refrigerators normally comprise a first compartment destined for the conservation of fresh foods, also called the fridge compartment, and a second compartment destined for the freezing and conservation of frozen foods, also called the freezer compartment, a refrigeration circuit comprising a compressor, a first and a second evaporator, respectively arranged in said first and second compartment, and a condenser; they also comprise an air temperature sensor situated in the first compartment (fresh foods cell or fridge cell), within which a manually adjustable device is also usually arranged for setting the temperature to a preferred value, from a field of acceptable values for the conservation of food; said sensor serves for disabling the compressor when the temperature in the fridge cell has fallen to the manually set value (for instance +2°C).

It is also known to arrange a second sensor on the evaporator of the first compartment, with the aim of managing the defrosting phases of the same, allowing the activation of the compressor when the evaporation plate has reached a determined positive temperature (for instance +4°C) that guarantees its complete defrosting.

In some refrigerators of the known type, the sensor arranged on the evaporator is utilised for detecting, in an indirect manner, the value of the temperature within the compartment; such indirect measuring system, if on the one hand does not require an internal air sensor in the fridge compartment, can on the other hand be influenced in a considerable manner by the external temperature conditions: for assuring a good functioning of the refrigerator it is therefore necessary to provide an appropriate external temperature sensor.

The difficulties are also known for obtaining a satisfying control of the temperature, both in the fridge compartment and in the freezer compartment, when the refrigerating circuit (compressor, condenser, evaporators) is single for both compartments, above all in correspondence to different environmental conditions that can be verified (in winter or in summer, in northern countries or southern countries, with a refrigerator in a heated house or placed on a balcony, etc.).

The provision of an evaluation of the external temperature with the aim of correctly managing the operative phases of a refrigeration circuit, that supplies both the fresh food cell and that of the frozen food, becomes imperative in appliances that operate the defrosting of the evaporator in the fresh food cell in a natural manner, i.e. without the use of an appropriate defrosting element. In such appliances in fact, in conditions of use wherein the environmental temperature is very low, if such conditions of use are not taken into consideration, the natural defrosting of the evaporator would take place over periods of time being too long and of such to provide an insufficient quantity of cold to the freezer cell, with the consequent deterioration of the food contained within. Likewise if the external temperature is too high and the system that manages the functioning times of the refrigeration circuit does not consider such temperature, this would lead to the danger of having the compressor constantly functioning, with the danger as a consequence of its overheating with the formation of the so called ice ball on the evaporator of the fresh food cell. From that described, the importance is clear, in natural defrosting refrigerators, for the provision of an external temperature sensor element.

The aforementioned European patent application 0 513 539 describes a refrigerator apparatus for domestic use that is characterised in the presence of a further temperature sensor dedicated to measuring the external temperature and positioned in such a way to carry out such measuring in a direct manner, and equipped with a microprocessor control system able to regulate the activation times of the compressor in a such a way to maintain stable, based on the temperature value detected by said external temperature sensor and taking into consideration the appropriate coded information stored in its permanent memory (ROM), the temperatures of its compartments upon variations of the environmental conditions.

The main aim of the present invention is that of indicating how it is possible, in a refrigerator apparatus the functioning of which is influenced by external conditions, to exploit the electronic control for obtaining in an indirect manner the external temperature value, without therefore the necessity of arranging for an appropriate sensor for its direct detection.

Further aim of the present invention is that of indicating such an apparatus that is able to, in a simple and economic way, supply information on its functioning conditions.

**For reaching such aims, the present invention has as its subject a control method for a refrigerator apparatus, and an electronically controlled household apparatus, having the features of claims 1 and 14.**

Further aims and advantages of the present invention shall result in being clear from the following detailed description and annexed drawings supplied purely as an explanatory and non limiting example, wherein:
- figure 1 schematically represents the refrigerator apparatus according to the invention;
- figure 2 schematically represents a possible command panel of the refrigerator apparatus of figure 1;
- figure 3 schematically represents the general logic flow of the program that realises the periodic updating of the external environmental temperature;
- figure 4 schematically represents the logic flow relative to a possible algorithm determining indirectly the external environmental temperature;
- figure 5 schematically represents the logic flow relative to the use of a fridge spy-light as a signalling instrument for the user;
- figure 6 schematically represents the logic flow relative to the use of a fridge spy-light as a diagnostic signalling instrument for the technical assistance.

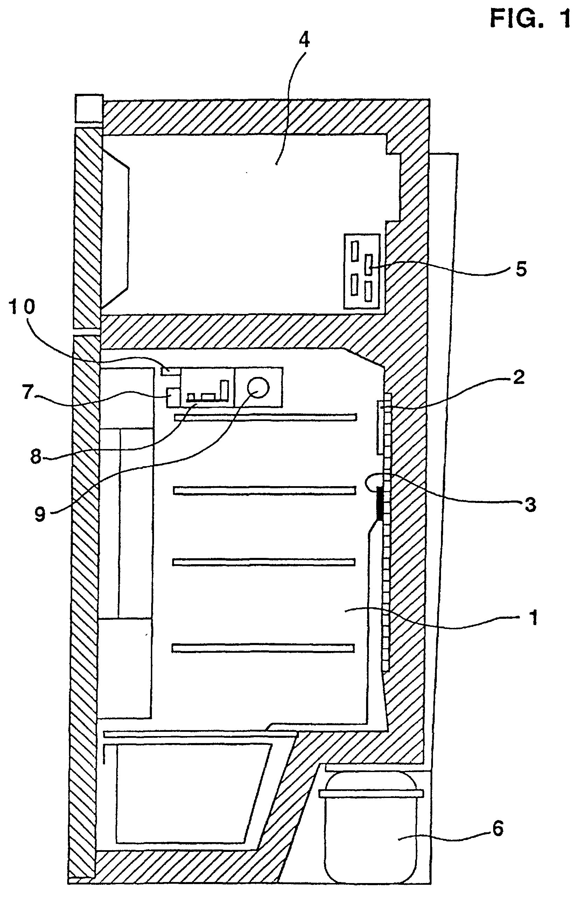

In figure 1, that schematically represents the refrigerator according to the invention, reference number 1 indicates a first compartment, or fridge compartment; reference number 4 indicates a second compartment, or freezer compartment; reference number 5 indicates an evaporator arranged in the freezer compartment 4. Reference number 7 indicates a command device of the refrigerator, containing a dial for setting the desired temperature within the fridge compartment and a spy-light that normally indicates the correct functioning of the apparatus, but can also take on the function of supplying diagnostic type information, as will be described later. Reference number 6 indicates a compressor (agent device).

Reference number 8 indicates the real and proper control device of the refrigerator, which is arranged inside the fridge compartment and is constituted, in its essential parts, by a supply circuit, a micro-controller, a first power actuator (electromechanical relay, or a solid state relay or a triac) for managing the compressor and, as an option, by a second power actuator (triac) for managing a light of the fridge compartment, indicated with reference number 9.

Reference number 2 indicates an evaporator arranged in the fridge compartment 1; reference number 3 indicates a sensor that measures the temperature of the fridge compartment. number 3 indicates a sensor that measures the temperature of the fridge compartment.

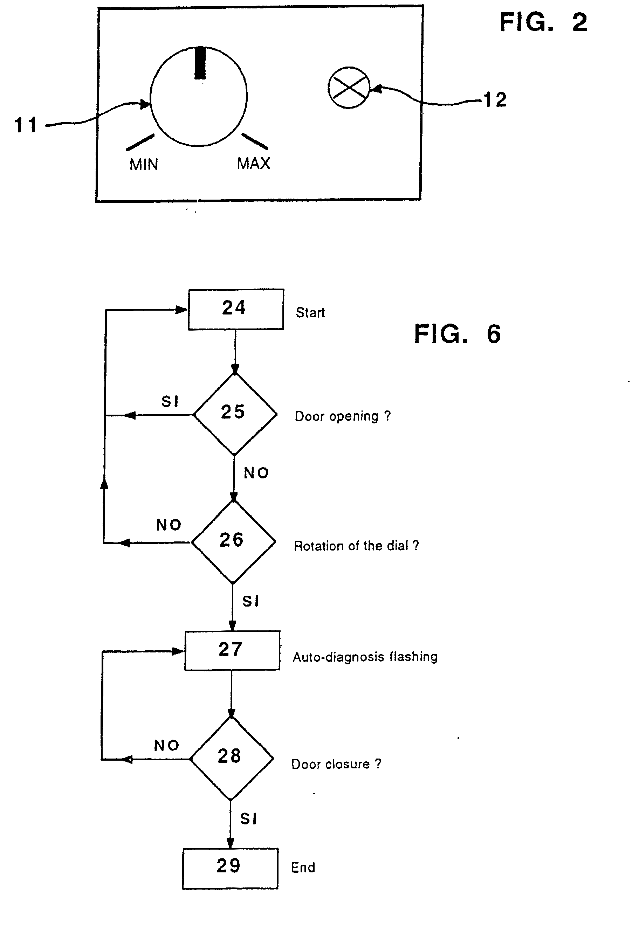

Reference number 10 indicates a lever button of the type normally used for activating the light 9 of the fridge compartment in the door open condition; such button can also take on the function of a sensor element of the open or closed state of the door of the fridge compartment 1. In figure 2, that schematically represents a possible command panel for the refrigerator according to the invention, reference number 11 represents the said regulation dial of the command device 7; said dial 11 is for instance constituted by a linear type rotatory potentiometer; reference number 12 represents a working spy-light, i.e. a spy-light which is always on in the presence of the mains supply.

In the present case illustrated as an example, the control of the air temperature within the fridge compartment is carried out in an indirect manner, in a way in itself known, by way of the sensor 3 and thanks to the electronic type control.

The micro-controller contained in the control device 8 constitutes the fundamental element for controlling the refrigerator according to the invention.

It readily has information, appropriately coded and organised within its permanent memory (ROM), that allows it to modify, by way of an appropriate control program contained in the same permanent memory, the values of the control parameters of the refrigerator upon variations of the external environmental temperatures (within determined limits) so as to maintain stable over time the temperature values chosen by the user by way of the appropriate command dial.

Said coded information in the permanent memory of the micro-controller is derived from numerous experimental trials carried out during the development phases of the control system; the aim of such trials is that of identifying, for every external environmental condition (simulated by way of a climatised chamber) the optimal values of the temperature control parameters in the internal compartments of the refrigerator, in accordance with the various needs of the user, which can be expressed by way of appropriate positioning of the pointer of the regulation dial 11 within a determined field of positions.

The coded method of said information may be of the traditional type, i.e. by way of appropriate tables of constants associated to the different environmental conditions and to the different needs of the user, or can be based on appropriate rules of the "IF <a> THEN <b>" (fuzzy rules) type, deriving from the theory of "fuzzy logic" applied to control systems, where <a> expresses the condition (detected with the use of appropriate sensors) and <b> expresses the consequent action. In particular this second method of coding experimental data allows for inserting within the permanent memory a considerable quantity of information, called knowledge base, under an extremely compact form and of such to enable its elaboration even by very economical devices (4 to 8 bit micro-controllers of a limited elaboration capacity).

For more details relative to the theory of fuzzy logic and its use in the field of control systems, note the widely available technical literature on such subject (e.g. H.J.Zimmermann: "Fuzzy Set Theory and its Applications", second addition, 1991, Kluwer Academic Publishers / B.Kosko: "Neural Networks and Fuzzy Systems", 1992, Prentice-Hall / D.Driancov, H.Hellendoorn, M.Reinfrank: "An Introduction to Fuzzy Control", 1993, Springer-Verlag).

More in particular, the control device 8 contains, inside its permanent memory ROM, the optimal value of the enabling times of the compressor 6 for every position of the manual regulation device, or dial, 11 and for every external temperature value comprised in the field of use of the apparatus itself, which is generally comprised between +10°C and +40°C.

Within permanent memory ROM information is also contained on the optimal value of the regulation reference parameters, that comprise the calibration thresholds used for the temperature regulation of the fridge compartment 1. Advantageously the permanent memory ROM also contains experimental information indicating the correspondence between the variational speed of the internal temperature and the external temperature.

Based on such information, the micro-controller of the control device 8, therefore, is able to carry out a dynamic correction of the disabling threshold of the compressor 6, in such a way that, upon variation of the external temperature, the constant temperature within the refrigerator is always guaranteed.

The main characteristic of the apparatus according to the invention actually consists in determining the external environmental temperature in an indirect manner, i.e. without the use of an appropriate sensor, through the exam of thermal dispersion of the refrigerator, i.e. examining the manner in which the temperature of the fridge compartment 1, detected by the same temperature sensor 3 used for the control, tends to raise, during the pause phases of the compressor 6, due to the effect of the influence of the external environment.

Said indirect determination of the temperature value of the external environment is made possible by the presence, within the permanent memory ROM of the micro-controller, of the specific knowledge base deriving from appropriate experimental trials carried out in various environmental conditions and with different functional conditions of the refrigerator, inputted by way of the regulation dial 11.

The principle of the temperature variation detected by the temperature sensor 3 depends, in fact, both on the thermal jump of the internal temperature of the fridge compartment and the external temperature, and on the characteristics of thermal insulation (such as geometry and thickness of the thermal insulation) of the refrigerator.

Therefore, with the established mechanical and thermodynamic characteristics of the refrigerator and appropriate experimental trials carried out in the development phase of varying the functional conditions (temperature of the external environment and the internal temperature chosen by the user), it is possible to obtain the rules (fuzzy rules) that express the dependency of the thermal dispersion from the environmental conditions and that allow the control system to detect within a decent approximation the value of the external environmental temperature.

In the process of indirect measuring of the external environmental temperature it is obviously necessary to consider the negative influence of the openings of the fridge door, which cause an abnormal temperature surge in the fridge compartment. Such problem is solved according to the invention avoiding the carrying out of the measure in the case of frequent openings of the door. In other words the lever button 10 associated to the fridge door is kept under control, normally used for managing the light, and the indirect measure of the external temperature is carried out only after a certain number of hours, for instance three, from the last opening of the door, considering valid such measure only if executed during the condition of the door being constantly closed.

In such case said button 10 is therefore used as a sensor element of the state of door opening or closure of the fridge compartment.

It is not normally difficult to find, over 24 hours, a period of non use of the apparatus, for instance during the night, conforming to the requirements necessary for carrying out a valid measure of the external temperature. However, even if the refrigerator were to be constantly used, day and night, the consequent delay in updating the value of the external temperature would not cause any problems, being as that the variations of such external temperature relate to climatic changes, that, as known, are very slow.

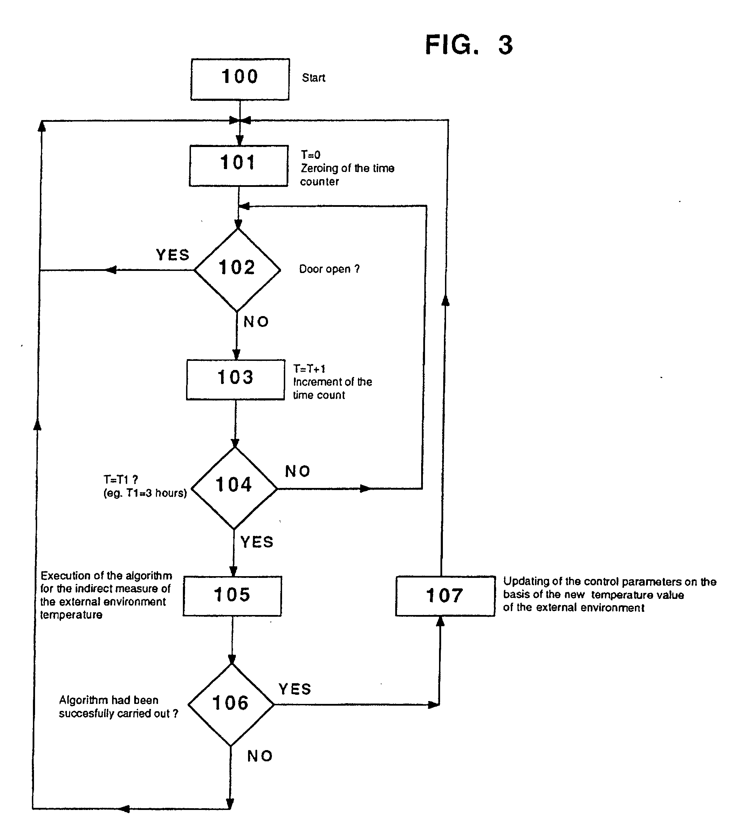

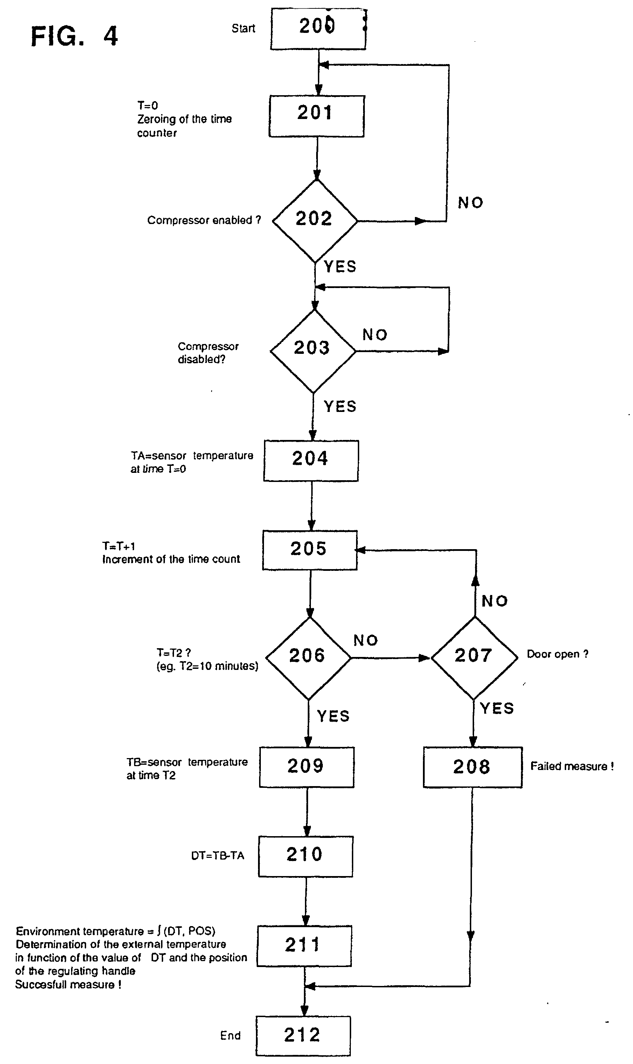

Figures 3 and 4 explain, by way of flow diagrams, the ways in which the value of the external environmental temperature is determined in an indirect manner.

Figure 3 represents the general flow diagram of a possible program of said micro-controller that carries out the periodic updating of the external environmental temperature.

In such figure 100 indicates the starting block of the logic flow and is connected to block 101; such block 101 provides for zeroing the time count and passes control to the successive block 102. Block 102 is a test block, it verifies whether the door of the fridge compartment is open: if the door is open control passes to block 101; if however the door is closed control passes to the successive block 103. Block 103 provides for increasing the time count and passes the control to block 104; such block 104 is a test block that verifies whether a time T1 has been reached, for example 3 hours, of a door closed condition: in the negative case control passes back to block 102, while in the positive case control passes to block 105. Block 105 provides for the execution of an algorithm for the indirect temperature measure of the external environment (such algorithm is described in general terms in the successive figure 4). Control then passes to the successive block 106, which is a test block and verifies whether the said algorithm has been successfully carried out: in the negative case control passes back to block 101, while in the positive case control is passed on to block 107. Such block 107 provides for the updating of the control parameters of the apparatus based on the new external temperature value.

From figure 3 it is understood therefore how the execution of the algorithm for the indirect determination of the external temperature is carried out each time that the door of the fridge compartment remains constantly closed for at least a time T1, for instance equal to 3 hours.

Figure 4 explains, by way of a flow diagram, a possible algorithm for the indirect determination of the external temperature.

In such figure 4 block 200 indicates the starting block of the logic flow, that passes control on to block 201; such block 201 provides for zeroing the time count and passes control on to the successive block 202. Block 202 is a test block, which verifies whether the compressor is active: in the negative case control passes back to block 201, while in the positive case control is passed on to the successive block 203. Block 203 is a test block that verifies the moment of disabling the compressor: in fact, if the compressor results in being active control passes back to block 203, while if the compressor results in being disabled control passes to the successive block 204. Block 204 provides for detecting the temperature TA within the fridge compartment the instant of disabling the compressor, and passes control to block 205, that provides for increasing the time count. Control is then passed on to block 206, which is a test block that provides for verifying whether a time T2 has been reached, for instance equal to 10 minutes, of a compressor disabled condition. In the negative case control passes to block 207, which is a test block that provides for verifying whether the door of the fridge compartment is open: in the negative case control passes back to block 205, while in the positive case control passes to block 208, which indicates the possibility of carrying out the indirect measure of the external temperature, which then passes the control to block 212, which is the final block of the program.

If, at block 206 the reaching of time T2 has been verified, control is then passed on to block 209, that provides for measuring the internal temperature TB of the fridge compartment at time T2. Control is then passed on to block 210, that provides for calculating the difference DT between the temperature TA and the temperature TB and passes control to block 211.

Such block 211 provides for the indirect determination of the external environmental temperature, which is calculated in function of the value DT and on the position of the manual command dial 11: in this case, therefore the indirect measure of the external temperature is successfully carried out and control is passed on to the final block of the program, indicated with 212.

From figure 4 it is therefore understood how, so as to determine the external temperature value, it is necessary to initially identify the instant in which the compressor, in the field of the thermostatic cycles, passes from the active state to that of pause, or disabled state, so as to be able to measure the internal heating speed of the refrigerator, i.e. its thermal dispersion, starting from such instant.

The measuring of said dispersion of the refrigerator (which depends on the external environment and on the cold level selected by the user by way of the appropriate dial) is carried out by calculating the temperature DT variations, detected by the internal sensor or sensor of the fridge compartment arranged on the evaporator, between the instant in which the compressor is paused (temperature TA) and a certain instant T2 (temperature TB). The detected temperature delta DT (DT=TB-TA), referring to the cold level selected by the user (POS), is then placed in relation with the experimental data contained in the permanent memory of the micro-controller.

In the case of use of the fuzzy type control logic, such data would be represented by said knowledge base experimentally obtained; on the other hand in the case in which a more traditional approach is used, it would be contained in an appropriate two dimensional table the values of which are respectively addressed by the temperature delta DT and by the position POS of the regulation dial. The data contained in each location of such table represents the external temperature values associated to the relative pair of values of DT and of POS.

It is to be noted that the algorithm represented in figure 4 allows for the indirect determining of the external environmental temperature only if said measure is not disturbed by an eventual opening of the door of the refrigerator (blocks 205-206-207 of the flow diagram of figure 4); in fact, in the case in which such door is opened, the execution of the algorithm will be immediately interrupted and the necessary conditions for enabling the carrying out of a measuring attempt will once again be searched.

As said, the refrigerator apparatus has in the said permanent memory optimal enabling and disabling times of the compressor relative to the different temperature values that can be selected by the user and to the different environmental situations. According to the invention its control system is also able to compare such permanently memorised values with the current enabling/disabling time values of the compressor (associated to a determined internal temperature value selected by the user and to a determined external temperature value indirectly measured as described above), these current values being contained in a read and write memory RAM associated to the micro-controller: in such way, therefore, the micro-controller is able to diagnose any eventual situations of abnormal functioning (for instance a reduction in the efficiency of the refrigerator due to a loss in the refrigerating circuit) based on the extent of differences, always referring to appropriate experimental data, obtained by simulating failure situations, coded in the permanent memory of the micro-controller.

In light of this, a further characteristic of the apparatus according to the invention consists in its capacity to supply information, useful for the user and for the technical assistance, by way of the appropriate use of the light radiated by a simple spy-light: such information concerning the functional state and efficiency of the refrigerator is communicated by way of different flashing frequencies of said spy-light, or by different flashing sequences (i.e. different number of consecutive flashes) with intervals and regularly repeated.

Such spy-light can be the normal functioning light 12, indicated in figure 2 next to the regulation dial 11, or better still, due to its low cost, it could coincide with the same light 9, which is always present, associated to the fridge compartment.

In the case in which the fridge light 9 is used as the spy-light for signalling information it is necessary that it be directly managed by the control system by way of an appropriate power actuator, such as an electromechanical relay or a triac. In such case the lever button 10 of the fridge door is only used as a sensor of the open or closed state of the door.

In the case of signalling useful information during the normal functioning of the refrigerator, the fridge light 9 could be used for warning the user, in open door conditions, that it would be better to close the door, so as to avoid excessive warming of the fridge compartment, being as that a certain period of time (for instance 30 seconds) has passed from the time in which the door was opened. For example the control system can manage the fridge light 9 in the following way:
- upon the opening of the door by the user, detected by the appropriate button 10, the light 9 is immediately switched on, with the aim of illuminating the relative compartment, and by way of the micro-controller the time count of the opening is initiated;
- after a determined time T1 (for instance T1=30 seconds) has passed of the door being maintained open, the micro-controller provides for softly flashing the light (for instance every two seconds), so as to remind the user that it would be wise to close said door;
- after a further time T2 (for instance T2=5 minutes) has passed with the door remaining open, the micro-controller provides for switching off the light, with the aim of limiting the heating of the light fitting and of said fridge compartment, and commands brief periodic flashes (for instance every 5 seconds) so as to continually remind the user of the necessity of closing the door.

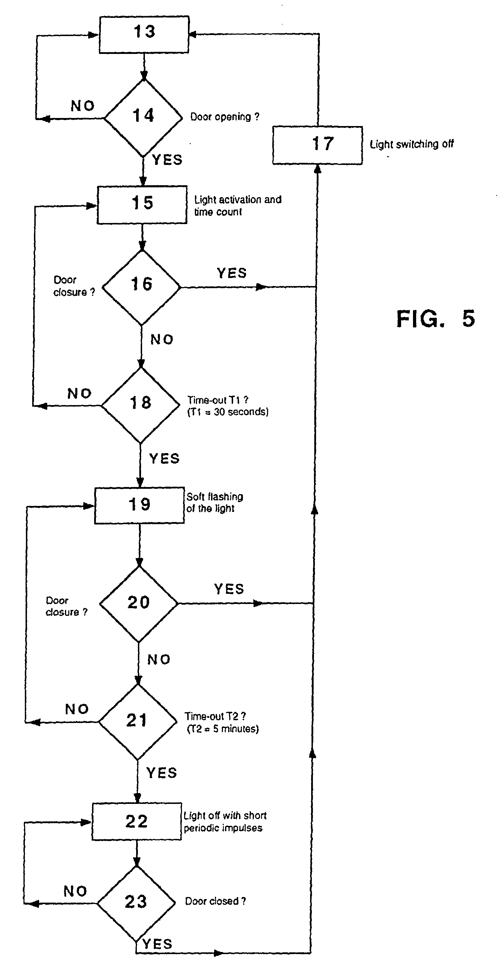

Figure 5 represents a flow diagram relative to the use of the fridge light for reminding the user not to keep the door of the fridge compartment open for too long.

In such figure block 13 indicates the starting block of the logic flow and is connected to block 14, which is a test block, which verifies whether the door of the fridge compartment is open. If the door is closed, control passes to the previous block 13; if on the other hand the door results in being open, control passes to the successive block 15. Block 15 carries out the switching on of the light, starts the time count in relation to the open door and passes control on to the successive block 16, which is a test block, that verifies whether the fridge door has been closed or not. If the door results in being closed, control is passed to block 17, which provides for switching off the light and then passes control to the initial block 13; if on the other hand the door results in being open, control is passed on to block 18, which is a test block, that verifies whether a time T1 (for instance T1=30 seconds) has passed.

If the time T1 has not yet passed, control passes to the previous block 15, if on the other hand the time T1 has already passed, control is passed to the successive block 19. Block 19 provides for enabling the soft flashing (with a period of approximately 2 seconds) of the fridge light and then passes control to the successive block 20, which is a test block, that verifies the eventual closing of the door.

If the door results in being closed, control is passed on to block 17, which provides for switching off the light and then passes control to the initial block 13; if on the other hand the door remains open, control is passed on to block 21, which is a test block, that verifies whether a time T2 has passed or not (for instance T2=5 minutes). If the time T2 has not yet passed, control is passed back to the previous block 19; if however the time T2 has already passed, control is passed on to the successive block 22, which provides for switching off the light and to activate periodic flashes of the same, and then passes control to the successive block 23, which is a test block, that verifies the eventual closure of the door.

If the door results in being closed, control is passed on to block 17, which provides for switching off the light and then passes control to the initial block 13; if on the other hand the door remains open, control passes to the previous block 22.

By way of appropriate flashing, the fridge light 9, or, as an alternative, the normal functioning spy-light 12 can also be used for diagnostic aims as a support for the technical assistance; in such a case it is necessary to enable said diagnostic function by way of an appropriate entry key, in such a way so as to avoid use, even accidental, by the user and thus avoiding possible confusion.

The proposed idea, for having access in a safe manner to the function of auto-diagnosis of the system, is described in the logic diagram of figure 6.

In such figure block 24 indicates the starting block of the logic flow and is connected to block 25, which is a test block, that verifies the open or closed state of the fridge door.

If the fridge door is open, control passes back to the previous block 24, if however the door is closed, control is passed on to the successive block 26, which is a test block, that verifies the eventual rotation of the regulation dial 11 from the minimum position to the maximum position or vice versa, with reference to a temporal slot of M seconds (for instance M=6 seconds). Verification of the said rotation of the regulation dial 11 within such temporal slot, being as that the door remains closed, indicates an apparently paradox situation, as said regulation dial, being arranged within the fridge compartment, cannot be manipulated with the door closed. Such fact, in reality, indicates to the control system that the technical assistance is intervening, with one hand on the regulation dial 11 and with the other the button 10 of the fridge door, simulating the closed door state.

This operation, that cannot suddenly occur in normal functioning conditions, in fact constitutes an entry key to the auto-diagnosis function, which explains by way of appropriate flashing sequences of the fridge light, corresponding to a digital transmitted message, that the repair man from the technical assistance is able to understand.

If the system recognises the aforementioned entry key, control is passed on to block 27; otherwise it returns back to the starting block 24.

Block 27 is the block which carries out the auto-diagnosis function and is connected to block 28, which is a test block, that verifies the passage from the door closed state in reality simulated by the technician to the door open state, and has the task of identifying the final condition of the auto-diagnosis phase.

If in fact the door is recognised as being closed, control passes back to block 27; if however the door is recognised as being open, control is passed on to block 29, which is the exiting block of the control system from the state of auto-diagnosis.

From the given description the characteristics and advantages of the control method of a refrigerating apparatus according to the invention result in being clear.

The immediate benefit deriving from the indirect determination of the external temperature, according to the invention, consists in the saving of a temperature sensor, the cost of which represents approximately 20% of the overall cost of a simplified type control system such as, for instance, that described in the present invention.

A further, very important, benefit is constituted by the greater overall reliability of the system, due to the lack of a component (the temperature sensor of the external environment) that is characterised by possible interconnection problems with the control board and by requirements of electrical and thermal insulation and insulation against environmental agents such as dampness or corrosion. To such benefits, those deriving from the knowledge of the value of the external temperature are to be added, which not only concern the performance of the refrigerator (i.e. the consistency, upon variations of the environmental conditions, of the temperature selected by the user), but also regarding its assistance (i.e. its auto-diagnosis capacity); in fact, knowing the external temperature and having the availability of appropriate experimental data coded in the permanent memory of the micro-controller, the control system is able to recognise any eventual abnormal functioning conditions of the refrigerator and to diagnose the cause.

Numerous variations can be introduced by the man of the art to the apparatus as described by way of example, without for this departing from the novelty principles inherent in the invention. For example, it is clear that the temperature value within the fridge compartment, rather than being determined in an indirect manner by the sensor 3 arranged on the evaporator, could be detected in a direct manner by way of an air temperature sensor, arranged inside said fridge compartment (for instance a sensor of the PTC or NTC type, directly welded to the internal circuit board of the control device 8).

## Claims

1. Control method for a refrigerator apparatus, comprising at least a first compartment (1), a refrigerating circuit comprising an agent device (6) which can be enabled and disabled, a manual regulation device (11) for regulating the functioning temperature within the apparatus, a sensor element (3) of the temperature within said first compartment (1), utilised for maintaining the same to a value chosen by way of said manual regulation device (11), and a digital electronic control device (8) that manages the functioning of the apparatus, said control device (8) being associated to a permanent memory (ROM), within which appropriate information is contained, indicating, for every position of the manual regulation device (11) and for every external temperature value comprised in a determined field of values, the optimal value of the active duration of said agent device (6), **characterised in that** the external environmental temperature value is determined in an indirect manner by said control device (8) through the exam of the thermal dispersion of the refrigerator, i.e. through an analysis of the speed of temperature variations within said first compartment (1), when the agent device (6) is disabled.

2. Method, according to claim 1, **characterised in that** the external environmental temperature value is obtained by said control device (8) based on the speed of temperature variations within said first compartment (1), obtained by the same sensor element (3) used for the internal temperature control of the same first compartment (1), and therefore without the use of a specific sensor element arranged in direct contact with said external environment.

3. Method, according to claim 1, **characterised in that** the external environmental temperature value is obtained taking into consideration the temperature set, by way of said manual regulation device (11), for said first compartment (1).

4. Method, according to claim 2 or 3, **characterised in that**, for determining the external environmental temperature value, the instant in which said agent device (6) passes from an active state to a disabled state is identified, the temperature variation (DT) within the first compartment between said instant and a determined successive instant (T2) is calculated, and the calculated temperature variation (DT=TB-TA), being referred to the temperature set by way of said manual regulation device (11), is then placed in relation with experimental data contained in the memory (ROM) associated to the control device (8).

5. Method, according to at least one of the previous claims, **characterised in that** the temperature within said first compartment (1) is based on the information supplied by said sensor element (3) and on that contained in the permanent memory (ROM) associated to said control device (8).

6. Method, according to claims 2 and 5, **characterised in that** said control device (8) provides for carrying out a dynamic correction of the disabling temperature threshold of the agent device (6) based on the experimental information indicating the correspondence between the speed of internal temperature and external temperature variation, contained in said permanent memory (ROM), in such a way that, upon variation of the external temperature, the internal temperature of the refrigerator is guaranteed as always being constant.

7. Method, according to at least one of the previous claims, **characterised in that** said apparatus also comprises a second compartment (4) and **in that** the internal temperature control of said second compartment (4) is managed in an indirect manner by said control device (8) by way of control of the temperature in said first compartment (1), the regulation of the temperature in said first compartment (1) and that indirect in said second compartment (4) being in particular carried out on the basis of information supplied by said sensor element (3) arranged within said first compartment (1).

8. Method, according to at least one of the previous claims, **characterised in that** the indirect measure of the external environmental temperature is carried out without interference due to the opening of the door of said first compartment (1), said indirect measure of the external temperature being in particular carried out after a determined interval of time during which no openings of the door of said first compartment (1) have taken place.

9. Method, according to at least one of the previous claims, **characterised in that** the value of said indirect measure of the external temperature is not considered valid if, during the measuring operation, at least one opening of the door of said first compartment (1) is verified.

10. Method, according to claim 1, **characterised in that** said control device (8) provides for comparing the optimal values of the control parameters with the current values of the same, obtained during the control process and contained in a read/write memory (RAM), with the aim of diagnosing, on the basis of the differences of the latter compared to former, the eventual abnormal functioning situations of the apparatus itself, the capacity of said control device (8) of diagnosing eventual abnormal functioning situations being based on criterion obtained by way of experimental trials, coded in the permanent memory (ROM) of the control device (8) itself, in particular according to the coded technology of fuzzy logic.

11. Method, according to claim 10, **characterised in that** the diagnostic information is externally supplied, upon inputting a specific command, by way of appropriate flashing of at least one spy-light, said specific command in particular consisting in carrying out a precise sequence of operations, known to the technicians of assistance, which is not compatible with the normal functioning of the apparatus.

12. Method, according to one of the previous claims, **characterised in that** said control device (8) provides for signalling the user, after a determined period of time in which said door remains open, the necessity of closing the door so as to avoid the excessive heating of the fridge compartment (1), in particular by way of a first type of flashing of said light (9) arranged in said first compartment (1).

13. Method, according to claim 12, **characterised in that**, after a determined period of time has passed from the opening of said door, said light (9) is switched off and only a second type of flashing takes place, reducing to the minimum the heat radiated by said light (9), for signalling the user of the necessity of closing the door.

14. Electronically controlled household apparatus, the functioning of which is influenced by external environmental conditions, in particular a refrigerator, comprising at least a first compartment (1), destined to contain that on which the action of said apparatus is to be applied, a first evaporator (2) situated in said first compartment (1), an agent device (6) which can be enabled and disabled, a manual regulation device (7,11) for regulating the functioning of the apparatus, a temperature sensor element (3) in said first compartment (1), utilised for maintaining the temperature in said compartment (1) to a value chosen by way of said manual regulation device (11), and a digital electronic control device (8) that manages the functioning of the apparatus, said control device (8) being associated to a permanent memory (ROM), within which appropriate information is contained, indicating, for every position of the manual regulation device (11) and for every value of the external environmental conditions comprised in a determined field of values, the optimal value of the active duration of said agent device (6), **characterised in that** in said permanent memory (ROM) information is contained for enabling said control device (8) to obtain the external temperature value based on the speed of temperature variations within said first compartrnent (1), measured by said sensor element (3), when the agent device (6) is disabled.

15. Domestic refrigerator device, according to claim 14, **characterised in that** in said permanent memory (ROM) experimental information is contained indicating the correspondence between the speed of variations of the internal temperature and the external temperature, in particular referring to the temperature set by way of said manual regulation device (11).

16. Domestic refrigerator apparatus, according to claim 14, **characterised in that** said control device (8) contains, within said permanent memory (ROM), the optimal activation times of the agent device (6) for every position of the manual regulation device (11) and for every external temperature value comprised within the field of use of the apparatus itself, which is in particular comprised between +10°C and +40°C.

17. Domestic refrigerator apparatus, according to claim 14, **characterised in that** in said permanent memory (ROM) information is contained on the optimal value of the temperature regulation reference parameters, said reference parameters comprising in particular the calibration thresholds used for regulating the temperature of said fridge compartment (1).

18. Domestic refrigerator apparatus, according to at least one of the previous claims, **characterised in that** said control device (8) is associated to a read/write memory (RAM) and **in that** said control device (8) provides for comparing the optimal values of the temperature regulation reference parameters with the current values of the same, obtained during the control process and contained in said read/write memory (RAM).

19. Domestic refrigerator apparatus, according to claim 14, **characterised in that** it also comprises a second compartment (4) destined to frozen foods, and a second evaporator (5) situated in said second compartment (4), connected in series to said first evaporator (2) and fed by the refrigerating liquid managed by said first agent device (6), the internal temperature control of said second compartment (4) being managed in an indirect manner through the temperature control of said first compartment (1).

20. Electronically controlled household apparatus according to claim 14, further comprising a second compartment (4) destined to contain that on which the action of said apparatus is to be applied, a second evaporator (2) situated in said second compartment (4), whereby in said permanent memory (ROM) information is contained for enabling said control device (8) to obtain the external temperature value starting from the single temperature sensor element (3) arranged in said first compartment (1) and that is also used for maintaining the temperature in said compartment (1) to a value set by way of the manual regulation device (11).

## Patentansprüche

1. Steuerverfahren für ein Kühlgerät, welches enthält: zumindest ein erstes Abteil (1), einen Kohlkreislauf, der eine Kühlmitteleinrichtung (6) aufweist, welche einund ausgeschaltet werden kann, eine Handregeleinrichtung (11), um die Betriebstemperatur innerhalb des Gerätes zu regulieren, ein Temperatursensorelement (3) innerhalb des ersten Abteils (1), das zum Aufrechterhalten der Temperatur auf einen Wert verwendet wird, welcher durch die Handregeleinrichtung (11) ausgewählt wird, und eine elektronische Digitalsteuereinrichtung (8), die den Betrieb des Gerätes steuert, wöbei die Steuereinrichtung (8) mit einem Permanentspeicher (ROM) zusammenwirkt, innerhalb dem geeignete Informationen enthalten sind, welche für jede Stellung der Handregeleinrichtung (11) und für jeden Außentemperaturwert, der in einem vorbestimmten Feld an Werten enthalten ist, den optimalen Wert der aktiven Dauer der Kühlmitteleinrichtung (6) kennzeichnet, **dadurch gekennzeichnet, dass** der Außenurngebungstemperaturwert in indirekter Weise durch die Steuereinrichtung (8) über die Untersuchung der Wärmeverteilung im Kühlgerät, d.h. durch eine Analyse der Geschwindigkeit der Temperaturveränderungen innerhalb des ersten Abteils (1) bestimmt wird, wenn die Kühlmitteleinrichtung (6) ausgeschaltet ist.

2. Verfahren nacn Anspruch 1, **dadurch gekennzeichnet, dass**, basierend auf der Geschwindigkeit der Temperaturveränderungen innerhalb des ersten Abteils (1), der Außenumgebungstemperaturwert durch die Steuereinrichtung (8) erhalten wird, wobei dies durch das gleiche Sensorelement (3) erhalten wird, welches für die innentemperatursteuerung des ersten Abteils (1) verwendet wird, und daher ohne den Gebrauch eines gesonderten Sensorelements, welches in unmittelbarem Kontakt zur Außenumgebung angeordnet ist.

3. Verfahren nach Anspruch 1, **dadurch gekennzeichnet, dass** der Außenumgebungstemperaturwert unter Berücksichtigung der Temperatur, die durch die Handregeleinrichtung (11) für das erste Abteil (1) eingestellt wird, erhalten wird.

4. Verfahren nach Anspruch 2 oder 3, **dadurch gekennzeichnet, dass** zum Bestimmen des Außenumgebungstemperaturwertes der Zeitpunkt, bei dem die Kühlmitteleinrichtung (6) von einem eingeschalteten Zustand zu einem ausgeschalteten Zustand wechselt, identifiziert wird, dass die Temperaturveränderung (DT) innerhalb des ersten Abteils zwischen diesem Zeitpunkt und einem vorbestimmten nachfolgenden Zeitpunkt (T2) berechnet wird und dass die berechnete Temperaturveränderung (DT=TB-TA) in Bezug zu der Temperatur gesetzt wird, die durch die Handregeleinrichtung (11) eingestellt wurde, und anschließend in Beziehung zu Experimentaldaten gesetzt wird, die in dem Speicher (ROM) gespeichert sind, der mit der Steuereinrichtung (8) zusammenwirkt.

5. Verfahren nach zumindest einem der vorstehenden Ansprüche, **dadurch gekennzeichnet, dass** die Temperatur innerhalb des ersten Abteils (1) auf den Informationen, die durch das Sensorelement (3) zugeführt werden, und auf den Informationen beruht, die in dem Permanentspeicher (ROM) enthalten sind, der mit der Steuereinrichtung (8) zusammenwirkt.

6. Verfahren nach Anspruch 2 und 5, **dadurch gekennzeichnet, dass**, basierend auf den experimentellen in dem Permanentspeicher (ROM) enthaltenen Informationen, die die Entsprechung zwischen der Geschwindigkeit der Innentemperatur- und der Außentemperaturveränderung kennzeichnen, die Steuereinrichtung (B) eine dynamische Korrektur für den Ausschalttamperatur-Schwellwert der Kühlmitteleinrichtung (6) in einer solchen Weise bereitstellt, dass garantiert ist, dass bei Veränderung der Außentemperatur die Innentemperatur des Kühlgerätes immer konstant bleibt.

7. Verfahren nach zumindest einem der vorstehenden Ansprüche, **dadurch gekennzeichnet, dass** das Gerät darüber hinaus ein zweites Abteil (4) aufweist und dass die Innentemperatursteuerung des zweiten Abteils (4) in indirekter Weise durch die Steuereinrichtung (8) mittels Steuerung der Temperatur in dem ersten Abteil (1) gesteuert wird, wobei die Regulierung der Temperatur in dem ersten Abteil (1) und die indirekte Steuerung in dem zweiten Abteil (4) insbesondere auf Basis der Informationen ausgeführt wird, die durch das Sensorelement (3) zugeführt werden, welches innerhalb des ersten Abteils (1) angeordnet ist.

8. Verfahren nach zumindest einem der vorstehenden Ansprüche, **dadurch gekennzeichnet, dass** die indirekte Messung der Außenumgebungstemperatur ohne Störung durch das Öffnen der Tür des ersten Abteils (1) ausgeführt wird, wobei die indirekte Messung der Außentemperatur insbesondere nach einem vorbestimmten Zeitintervall erfolgt, während dem keine Öffnung der Tür des ersten Abteils (1) stattgefunden hat.

9. Verfahren nach zumindest einem der vorstehenden Ansprüche, **dadurch gekennzeichnet, dass** der Wert der indirekten Messung der Außentemperatur als nicht gültig angesehen wird, falls während des Messvorganges zumindest ein Öffnen der Tür des ersten Abteils (1) erkannt wird.

10. Verfahren nach Anspruch 1, **dadurch gekennzeichnet, dass** die Steuereinrichtung (8) den Vergleich der optimalen Werte der Steuerparameter mit den augenblicklichen Werten der Steuerparameter, die während des Steuervorgangs erhalten werden und die in einem Lese-/Schreibspeicher (RAM) enthalten sind, mit dem Ziel bereitstellt, auf Basis der Unterschiede der augenblicklichen Werte verglichen mit den Erstgenannten, die eventuelle abnormale Funktionssituation des Gerätes selbst zu diagnostizieren, wobei die Kapazität der Steuereinrichtung (8) zur Diagnose eventueller abnormaler Funktionssituationen auf einem Kriterium beruht, welches im Wege experimenteller Versuche erhalten wird und welches in dem Permanentspeicher (ROM) der Steuereinrichtung (8) selbst, insbesondere gemäß der codierten Technologie der Fuzzylogik codiert ist.

11. Verfahren nach Anspruch 10, **dadurch gekennzeichnet, dass** die Diagnoseinformation bei Eingabe eines spezifischen Befehls mittels geeignetem Blinken von zumindest einem Spionlicht nach außen geführt wird, wobei der spezielle Befehl insbesondere darin besteht, eine genaue Folge an Vorgängen, die den Wartungstechnikern bekannt ist, ausgeführt wird, welche nicht mit der normalen Funktion des Gerätes kompatibel ist.

12. Verfahren nach einem der vorstehenden Ansprüche, **dadurch gekennzeichnet, dass**, nachdem eine vorbestimmte Zeitperiode verstrichen ist, in der die Tür offen geblieben ist, die Steuereinrichtung (8) eine Anzeige für den Benutzer über die Notwendigkeit des Schließens der Tür bereitstellt, um eine übermäßige Erwärmung des Kühlabteils (1) zu vermeiden, insbesondere mittels einer ersten Art des Blinkens des Lichtes (9), das in dem ersten Abteil (1) angeordnet ist.

13. Verfahren nach Anspruch 12, **dadurch gekennzeichnet, dass**, nachdem eine vorbestimmte Zeitperiode nach dem Öffnen der Tür verstrichen ist, das Licht (9) ausgeschaltet wird und, um dem Benutzer die Notwendigkeit des Schließens der Tür zu signalisieren, nur eine zweite Art des Blinkens stattfindet, bei der die Wärme, die durch das Licht (9) abgestrahlt wird, auf ein Minimum reduziert wird.

14. Elektronisch gesteuertes Haushaltsgerät, dessen Betrieb durch äußere Umgebungsbedingungen beeinflusst wird, insbesondere ein Kühlgerät, enthaltend zumindest ein erstes Abteil (1), das zur Aufnahme der Dinge bestimmt ist, auf die die Wirkung des Gerätes angewandt wird, einen ersten Verdampfer (2), der in dem ersten Abteil (1) angeordnet ist, eine Kühlmitteleinrichtung (6), welche ein- und ausgeschaltet werden kann, eine Handregeteinrichtung (7, 11), um den Betrieb des Gerätes zu steuern, ein Temperatursensorelement (3) in dem ersten Abteil (1), welches zum Aufrechterhalten der Temperatur in diesem Abteil (1) auf einem Wert verwendet wird, der mittels der Handregeleinrichtung (11) ausgewählt wird. und eine elektronische Digitalsteuereinrichtung (8), die den Betrieb des Gerätes steuert, wobei die Steuereinrichtung (8) mit einem Permanentspeicher (ROM) zusammenwirkt, in dem geeignete Informationen enthalten sind, die für jede Stellung der Handregeleinrichtung (11) und für jeden Wert der Außenumgebungsbedingungen, der in einem vorbestimmten Feld an Werten enthalten ist, den optimalen Wert der aktiven Dauer der Kühlmitteleinrichtung (6) kennzeichnet, **dadurch gekennzeichnet, dass** in dem Permanentspeicher (ROM) Informationen enthalten sind, um es der Steuereinrichtung (8) zu ermöglichen, den Außentemperaturwert basierend auf der Geschwindigkeit der Temperaturveränderungen innerhalb des ersten Abteils (1), gemessen durch das Sensorelement (3), zu erhalten, wenn die Kühlmitteleinrichtung (6) abgeschaltet ist.

15. Haushaltskühlgerät nach Anspruch 14, **dadurch gekennzeichnet, dass** in dem Permanentspeicher (ROM) experimentelle Informationen enthaltend sind, die die Beziehung zwischen der Geschwindigkeit der Veränderungen der Innentemperatur und der Außentemperatur kennzeichnen, insbesondere auf die Temperatur Bezug nehmend, die durch die Handregeleinrichtung (11) eingestellt ist.

16. Haushaltskühlgerät nach Anspruch 14, **dadurch gekennzeichnet, dass** die Steuereinrichtung (8) innerhalb des Permanentspeichers (ROM) die optimalen Betriebszeiten für die Kühlmitteleinrichtung (6) für jede Stellung der Handregeleinrichtung (11) und für jeden Außentemperaturwert enthält, der innerhalb des Einsatzfeldes des Gerätes selbst enthalten ist, welches insbesondere zwischen +10°C und +40°C liegt.

17. Haushaltskühlgerät nach Anspruch 14, **dadurch gekennzeichnet, dass** in dem Permanentspeicher (ROM) Informationen hinsichtlich des optimalen Wertes für die Temperatursteuer-Referenzparameter enthalten sind, wobei die Referenzparameter insbesondere die Kalibrier-Schwellwerte enthalten, die zur Steuerung der Temperatur des Kühlabteils (1) verwendet werden.

18. Haushaltskühlgerät nach zumindest einem der vorstehenden Ansprüche, **dadurch gekennzeichnet, dass** die Steuereinrichtung (8) mit einem Lese-/Schreibspeicher (RAM) zusammenwirkt und dass die Steuereinrichtung (8) den Vergleich der optimalen Werte der Temperatursteuer-Referenzparameter mit den augenblicklichen Werten der Temperatursteuer-Referenzparameter, die während der Steuervorganges erhalten werden und in dem Lese-/Schreibspeicher (RAM) aufgenommen sind, bereitstellt.

19. Haushaltskühlgerät nach Anspruch 14, **dadurch gekennzeichnet, dass** es darüber hinaus ein zweites Abteil (4) enthält, das dazu dient, gefrorene Nahrungsmittel aufzunehmen, und dass ein zweiter Verdampfer (5) vorgesehen ist, der in dem zweiten Abteil (4) angeordnet ist, mit dem ersten Verdampfer (2) in Reihe verbunden ist und mit Kühlflüssigkeit, die durch die erste Kühlmitteleinrichtung (6) benutzt wird, versorgt wird, wobei die Innentemperatursteuerung des zweiten Abteils (4) in indirekter Weise über die Temperatursteuerung des ersten Abteils (1) erfolgt.

20. Elektronisch gesteuertes Haushaltsgerät nach Anspruch 14, weiter enthaltend ein zweites Abteil (4), das zur Aufnahme der Dinge bestimmt ist, auf die die Wirkung des Gerätes angewandt wird, und einen zweiten Verdampfer (2), der in dem zweiten Abteil (4) angeordnet ist, wobei in dem Permanentspeicher (ROM) Informationen enthalten sind, die es der Steuereinrichtung (8) ermöglichen, den Außentemperaturwert ausgehend von dem einzelnen Temperatursensorelement (3) zu erhalten, das in dem ersten Abteil (1) angeordnet ist und das darüber hinaus zum Aufrechterhalten der Temperatur in dem ersten Abteil (1) auf einen Wert verwendet wird, der durch die Handregeleinrichtung (11) eingestellt ist.

## Revendications

1. Procédé de commande pour un appareil frigorifique, comprenant au moins un premier compartiment (1), un circuit de réfrigération comprenant un dispositif d'agent (6) qui peut être activé et inactivé, un bouton de régulation manuel (11) pour réguler la température de fonctionnement dans l'appareil, un élément de capteur (3) de la température dans ledit premier compartiment (1), utilisé pour maintenir celui-ci à une valeur choisie au moyen dudit bouton de régulation manuel (11), un bouton de commande électronique numérique (8) qui gère le fonctionnement de l'appareil, ledit bouton de commande (8) étant associé à une mémoire permanente (ROM), dans lequel les informations appropriées sont contenues, indiquant, pour chaque position du bouton de réglage de régulation (11) et pour chaque valeur de température externe comprise dans un champ de valeurs déterminé, la valeur optimale de la valeur active dudit dispositif d'agent (6), **caractérisé en ce que** la valeur de température environnementale externe est déterminée d'une manière indirecte par ledit bouton de commande (8) via l'examen de la dispersion thermique du réfrigérateur, c'est-à-dire via une analyse de la vitesse de variation de température dans ledit premier compartiment (1), lorsque le dispositif d'agent (6) est inactivé.

2. Procédé selon la revendication 1, **caractérisé en ce que** la valeur de température environnementale externe est obtenue par ledit bouton de commande (8) sur la base de la vitesse des variations de température dans ledit premier compartiment (1), obtenu par le même élément de capteur (3) utilisé pour la commande de température interne du même premier compartiment (1), et par conséquent sans utilisation d'un élément de capteur spécifique disposé en contact direct avec ledit environnement externe.

3. Procédé selon la revendication 1, **caractérisé en ce que** la valeur de température d'environnement externe est obtenue en prenant en considération la température réglée, au moyen dudit bouton de régulation manuel (11), pour ledit premier compartiment (1).

4. Procédé selon la revendication 2 ou 3, **caractérisé en ce que**, pour déterminer la valeur de température environnementale externe, l'instant dans lequel ledit dispositif d'agent (6) passe de l'état actif à l'état inactivé est identifié, la variation de température (DT) dans le premier compartiment entre ledit instant et un instant successif déterminé (T2) est calculée, et la variation de température calculée (DT = TB-TA), étant désignée par la température réglée au moyen dudit bouton de régulation manuel (11), est alors placé dans une relation avec les données expérimentales contenues dans la mémoire (ROM) associée au bouton de commande (8).

5. Procédé, selon l'une quelconque des revendications précédentes, **caractérisé en ce que** la température dans ledit premier compartiment (1) est basée sur les informations fournies par ledit élément de capteur (3) et sur celles contenues dans la mémoire permanente (ROM) associée audit bouton de commande (8).

6. Procédé selon les revendications 2 et 5, **caractérisé en ce que** ledit bouton de commande (8) fourni pour réaliser une correction dynamique du seuil de température d'inactivation du dispositif d'agent (6) sur la base des informations expérimentales indiquant la correspondance entre la vitesse de la variation de température interne et de température externe, contenue dans ladite mémoire permanente (ROM), de manière à ce que, lors de la variation de la température externe, la température interne du réfrigérateur est garantie comme étant toujours constante.

7. Procédé selon au moins une des revendications précédentes, **caractérisé en ce que** ledit appareil comprend aussi un second compartiment (4) et **en ce que** la commande de température interne dudit second compartiment (4) est gérée d'une manière indirecte par ledit bouton de commande (8) au moyen de la commande de la température dans ledit premier compartiment (1), la régulation de la température dans ledit premier compartiment (1) et celle indirecte dans ledit second compartiment (4) étant en particulier réalisée sur la base des informations fournies par ledit élément de capteur (3) disposé dans ledit premier compartiment (1).

8. Procédé selon au moins une des revendications précédentes, **caractérisé** en ce la mesure indirecte de la température environnementale externe est réalisée sans interférence due à l'ouverture de la porte dudit premier compartiment (1), ladite mesure indirecte de la température externe étant en particulier réalisée après un intervalle déterminé de temps pendant lequel il n'y a aucune ouverture de la porte dans ledit premier compartiment (1).

9. Procédé, selon au moins une des revendications précédentes, **caractérisé** en ce la valeur de ladite mesure indirecte de la température externe n'est pas considérée valide, si, pendant l'opération de mesure, au moins une ouverture de la porte dudit premier compartiment (1) est vérifiée.

10. Procédé selon la revendication 1 **caractérisé en ce que** ledit bouton de commande (8) fournit pour comparer les valeurs optimales des paramètres de commande avec des valeurs actuelles de celui-ci, obtenues pendant le traitement de commande et contenues dans une mémoire de lecture/écriture (RAM) dans le but de diagnostiquer, sur la base des différences de la dernière comparée à la première, des situations de fonctionnement anormales éventuelles de l'appareil lui-même, la capacité dudit bouton de commande (8) de diagnostiquer des situations de fonctionnement anormales éventuelles étant basée sur des critères obtenus au moyen d'essais expérimentaux, codés dans la mémoire permanente (ROM) du bouton de commande (8) lui-même, en particulier selon la technologie codée de logique floue.

11. Procédé selon la revendication 10, **caractérisé** en ce les informations de diagnostic sont fournies de façon externe, lors de l'entrée d'une commande spécifique, au moyen de clignotements appropriés d'au moins un voyant témoin, ladite commande spécifique en particulier se composant dans la réalisation d'une séquence précise de fonctionnement, connue des techniciens de maintenance, qui n'est pas compatible avec le fonctionnement normal de l'appareil.

12. Procédé selon l'une quelconque des revendications précédentes, **caractérisé en ce que** ledit bouton de commande (8) fournit pour signaliser à l'utilisateur, après une période de temps déterminée pendant laquelle ladite porte reste ouverte, la nécessité de fermer la porte afin d'éviter l'échauffement excessif du compartiment frigorifique (1), en particulier au moyen d'un premier type de clignotement de ladite lumière (9) disposé dans ledit premier compartiment (1).

13. Procédé selon la revendication 12, **caractérisé en ce qu'**après qu'une période de temps déterminé se soit écoulée à partir de l'ouverture de ladite porte, ladite lumière (9) est éteinte et seulement un second type de clignotement a lieu, réduisant au minimum l'échauffement rayonné par ladite lumière (9), pour signaler à l'utilisateur la nécessité de fermer la porte.

14. Appareil domestique contrôlé électroniquement, dont le fonctionnement est influencé par les conditions environnementales externes, en particulier un réfrigérateur, comprenant au moins un premier compartiment (1), destiné à contenir ce sur quoi l'action dudit appareil est à appliquer, un premier évaporateur (2) situé dans ledit premier compartiment (1), un dispositif d'agent (6) qui peut être activé et inactivé, un bouton de régulation manuel (7, 11) pour réguler le fonctionnement de l'appareil, un élément de capteur de température (3) dans ledit premier compartiment (1), utilisé pour maintenir la température dans ledit premier compartiment (1) à une valeur choisie au moyen dudit bouton de régulation manuel (11), et un bouton de commande électronique numérique (8) qui gère le fonctionnement de l'appareil, ledit bouton de commande (8) étant associé à une mémoire permanente (ROM), dans laquelle des informations appropriées sont contenues, indiquant, pour chaque position dudit bouton de régulation manuel (11) et pour chaque valeur des conditions environnementales externes comprises dans le champ de valeur déterminé, la valeur optimale de la durée active dudit dispositif d'agent (6), **caractérisé** en ce lesdites informations de mémoire permanente (ROM) sont contenues pour permettre audit bouton de commande (8) d'obtenir la valeur de température externe sur la base de la vitesse des variations de température dans ledit premier compartiment (1), mesurée par ledit élément de capteur (3), lorsque le dispositif d'agent (6) est inactivé.

15. Dispositif de réfrigérateur domestique, selon la revendication 14, **caractérisé** en ce dans ladite mémoire permanente (ROM) des informations expérimentales soient contenues indiquant la correspondance entre la vitesse de variation de la température interne et la température externe, en particulier en se référant à la température réglée au moyen dudit bouton de régulation manuel (11).

16. Appareil frigorifique domestique, selon la revendication 14, **caractérisé** en ce ledit bouton de commande (8) contient, dans ladite mémoire permanente (ROM), les temps d'activation optimums du dispositif d'agent (6) pour chaque position dudit bouton de régulation manuel (11) et pour chaque valeur de température externe comprise dans le champ d'utilisation de l'appareil lui-même, qui est en particulier compris entre +10°C et +40°C.

17. Appareil frigorifique domestique, selon la revendication 14, **caractérisé en ce que** dans ladite mémoire permanente (ROM) des informations sont contenues sur la valeur optimale des paramètres de référence de régulation de température, lesdits paramètres de référence comprenant en particulier les seuils de calibrage utilisés pour réguler la température dudit compartiment frigorifique (1).

18. Appareil frigorifique domestique, selon au moins une des revendications précédentes, **caractérisé en ce que** ledit bouton de commande (8) est associé à une mémoire de lecture/écriture (RAM) et **en ce que** ledit bouton de commande (8) fournit la comparaison des valeurs optimales des paramètres de référence de régulation de température avec les valeurs actuelles de celles-ci, obtenues pendant le traitement de commande et contenues dans ladite mémoire de lecture/écriture (RAM).

19. Appareil frigorifique domestique, selon la revendication 14, **caractérisé** en qu'il comprend aussi un second compartiment (4) destiné aux aliments congelés, et un second évaporateur (5) situé dans ledit second compartiment (4) monté en série avec ledit premier évaporateur (2) et alimenté par le liquide de réfrigération géré par ledit premier dispositif d'agent (6), la commande de température interne dudit second compartiment (4) étant gérée d'une manière indirecte via la commande de température dudit premier compartiment (1).

20. Appareil domestique commandé électroniquement, selon la revendication 14, comprenant en outre un second compartiment (4) destiné à contenir ce sur quoi l'action dudit appareil est à appliquer, un second évaporateur (2) situé dans ledit second compartiment (4), de sorte que dans ladite mémoire permanente (ROM) des informations sont contenues pour permettre audit bouton de commande (8) d'obtenir la valeur de température externe commençant à partir de l'élément de capteur de température unique (3) disposé dans ledit premier compartiment (1) et qui est aussi utilisé pour maintenir la température dudit compartiment (1) à une valeur réglée au moyen dudit dispositif de régulation manuel (11).
